# EUROPEAN PATENT SPECIFICATION

(11) **EP 0 336 883 B1**
(45) Date of publication and mention of the grant of the patent: **13.01.1999**
(21) Application number: 89730098.4
(22) Date of filing: 10.04.1989
(51) Int. Cl.: B01D 46/00, F01N 3/02, B22F 3/10, B22F 3/22, C04B 38/00

(54) **Method for preparing a porous filter body**
Verfahren zur Herstellung eines porösen Filterkörpers
Procédé pour la préparation d'un corps de filtrage poreux

(30) Priority: 08.04.1988 DK 193988; 18.08.1988 DK 465088
(43) Date of publication of application: 11.10.1989
(73) Proprietor: Stobbe, Per, 2800 Lyngby (DK)
(72) Inventor: Stobbe, Per, 2800 Lyngby (DK)
(74) Representative: Andersen, Henrik Rastrup

(56) References cited:
- EP-A- 0 043 694
- EP-A- 0 057 848
- EP-A- 0 089 756
- JP-A-57 110 311
- JP-A-58 143 817
- US-A- 4 813 231

## Description

The present invention relates to the technical field of filtering particles from flue gas generated by the combustion of fossil fuel, such as coal, fuel oil or diesel oil. A particular application of the present invention is the technical field of filtering particles from exhaust gases from a combustion engine, particularly a diesel engine, which may be a motor in a vehicle, e.g. a truck, a locomotive, an aircraft, a ship or constitute a working machine in a power plant. Alternatively or additionally, the present invention may find application in the technical field of filtering particles from flue gas exhausted from power plants and refuse disposal plants.

It is well-known within the art to filter particles or soot from the exhaust or flue gases generated by the combustion of combustible material, such as coal or oil, particularly fuel oil or diesel oil.

Exhaust or flue gas filters for diesel engines aim at filtering the soot from the exhaust or flue gas of diesel engines. The emission of soot from diesel engines is not desirable, as the surface of the soot particles contains small amounts of adsorbed substances, which soot particles and which substances are considered to cause damage.

Some filters for filtering soot from exhaust and flue gas generated by diesel engines are made of a monolith of porous ceramic material, which consists of ducts with thin walls. The ducts are parallel to one another and are each positioned along its whole length in the flow direction of the exhaust or flue gas. The ducts are alternately closed at the upstream or the downstream end and are frequently alternately opened or closed in a checkerboard pattern. Thus, each duct has an open and a closed end. In an alternative embodiment the filter may be wound in the shape of a spiral so as to form a gas-permeable packet, like a corrugated piece of cardboard. Thereby, the covering of the individual ducts is no longer only constructed like a checkerboard, but also like a spiral.

When emissions from a diesel engine are conducted through the above type of filter, exhaust or flue gas enters through the ducts which are open on the inlet side. The exhaust or flue gas is then forced to flow laterally through the porous duct walls into the adjacent ducts, which are open on the outlet side. In this case, the soot particles will accumulate in the ducts that are open upstream, as they cannot pass through the duct walls. The accumulated soot will burn off when a certain temperature is reached, and when a sufficient oxygen concentration is present in the exhaust or flue gas, and the filter will then be regenerated. Between two such processes there is a substantial rise in exhaust or flue gas counterpressure, and this means an increased loading of the filter. In some instances, the burning off of soot becomes extremely intense. Thus, if the filter has reached a high temperature as the engine has been working, and as a high exhaust or flue gas flow with low oxygen content has been conducted through the filter, and if the exhaust or flue gas flow is then reduced to a low flow with high oxygen content, the soot is burned off, by which burning-off, due to the low flow, the energy generated by the burning-off is accumulated in the filter resulting in an extreme increase in the temperature of the filter, which may result in that the melting point of the ceramic material is exceeded and the filter is destroyed.

The above problem is described in US patent No. 4,667,469, to which reference is made, and which is herewith incorporated in the present specification by reference. According to the teachings of the above US patent, a particular structure of the ceramic gas filter is claimed to solve the above problem. However, it has turned out that the gas filters constructed in accordance with the teachings of the above US patent are susceptible to destruction through the burning-off of soot.

In US patents Nos. 4,436,538 and 4,604,869, to which reference is made, and which are herewith incorporated in the present specification by reference, alternative ceramic gas filter structures are disclosed. Common to the known gas filters, which are based on ceramic materials, is the fact that the gas filters are highly susceptible to destruction by burning-off of the soot accumulated in the gas filters. Furthermore, known gas filters based on ceramic materials are of extremely low mechanical strength. Thus, it has turned out that a Corning glass filter disc constituting a component of the gas filter described in US patent No. 4,667,469 is very brittle and has extremely low tensile strength.

Also JP-A-57110311, JP-A-58143817 and US-A-4813231 relate to different types of filter bodies, and more specifically to filter bodies made of SiC.

An object of the present invention is to provide a method for preparing a flue gas filter means, by means of which flue gas filter means the above burning-off problems are solved.

An advantage of the present invention as compared to the known ceramic gas filter structures, which at present are extremely expensive, is the fact that the flue or gas filter means according to the present invention may be manufactured from fairly cheap materials, and consequently sold at a low price, by the employment of extremely simple manufacturing processes well-known, *per se*, within the art.

A further advantage of the present invention as compared to the known ceramic gas filter structures, which have extremely low mechanical strength, is the fact that the flue gas filter means prepared according to the present invention has a high mechanical strength, which renders it possible to provide filter means assemblies of a larger size than filter assemblies constructed from known ceramic filter structures. Thus, known ceramic structures or ceramic filter assemblies are difficult to manufacture in a size larger than 2-5 litres, as a larger structure becomes too brittle and may be destroyed by exposure to vibrations, such as vibrations generated in an automobile. Contrary to these known filter assemblies, the gas filter means prepared according to the present invention may be implemented in assemblies of a size of at least 20-30 litres. Thus, large assembly units may be provided in accordance with the present invention.

A still further advantage of the present invention as compared to the known ceramic gas filter structures, which have extremely low thermal conductivity and extremely low thermal expansion coefficients, is the fact that contrary to the known ceramic gas filter structures, which demand a sofisticated canning, the flue gas filter means prepared according to the present invention is easily canned in e.g. a low alloy stainless steel can or enclosure means or in another can or enclosure means of another appropriate metal material.

The above and other objects, features and advantages are obtained by a method according to the present invention for preparing a porous filter body by mixing SiC particles with a particle size of 75 - 170 µm, a green or volatile binder, a plasticity or viscosity controlling agent and a solvent, to produce a plastic paste, extruding the paste to form an extruded green body and sintering the extruded body to produce a filter body whereby a permanent or ceramic binder is generated, the filter body having a maximum pore size of 10 - 100 µm, a thermal conductivity of at least 5 W/(m K) and a porosity of 30 - 60 % .

The basis of the technical solution to the above stated problem is the realization that the accumulation of energy by the burning-off of particles accumulated in the porous filter body may be eliminated or reduced by producing the porous filter body of SiC and having a high thermal conductivity so as to conduct or spread the heat generated locally by the burning-off of the particles accumulated in the porous filter body throughout the porous filter body in order to reduce the local temperature rise generated in the porous filter body by the burning-off and consequently reduce the thermal stresses to which the porous filter body is locally exposed to such an extent that any fatal destruction of the porous filter body is eliminated.

A particular aspect relates to a regeneration technique. Thus, preferably the burning-off of the particles is generated by heating the porous filter body to such a temperature that the particles are burned off.

Thus, the porous filter body may conduct heat from an external heat source or may conduct electric current, which provides a heating of the filter body, in order to bring about the heating of the filter body. The temperature at which carbon is oxidized in the atmosphere to carbon monoxide is approx. 500°C, while the temperature at which carbon particles contained in exhaust or flue gas from e.g. a diesel engine are oxidized is approx. 500-550°C. Consequently, provided a carbon oxidizing catalyst, such as e.g. vanadium pentoxide, Fe₂O₃, other ferrous oxides or copper oxides, is employed, the temperature to which the filter body is heated in accordance with the regeneration aspect is of the order of 300-600°C, preferably 300-450°C.

The above regeneration of the filter means prepared according to the present invention by heating the porous filter body to such a temperature that any particles accumulated in the porous filter body are burned off may preferably be carried out periodically, and the step of conducting the flue gas through the filter means is preferably also carried out periodically, so that at least two porous filter bodies are employed, one of which is used for filtering particles from the flue gas by conducting the flue gas therethrough, while the other porous filter body is regenerated by heating the porous filter body to a temperature, which brings about the burning-off of any particles accumulated therein. After a period of time constituting an operational cycle, the first porous filter body is regenerated, and the other porous filter body is used for filtering particles from the flue gas by conducting the flue gas therethrough.

However, it is to be emphasized that the periodic regeneration of the porous filter bodies prepared according to the method of the present invention is not limited to a set of porous filter bodies comprising at least two porous filter bodies, as a single porous filter body may periodically be heated to a temperature at which any particles accumulated therein are burned off, while the flue gas is still conducted through the porous filter body or while the porous filter body is not in operation (the particles generating engine or plant, the exhaust or flue gas of which is conducted to the porous filter body is not in operation). Still further, during the regeneration of the porous filter body prepared according to the method of the present invention, oxygen may be introduced into the porous filter body for accelerating the burning-off of the particles accumulated therein, or a chemical constituent promoting or catalyzing the burning-off of the particles may be used, or preheated air may be introduced into the porous filter body for producing the burning-off of the particles accumulated in the porous filter body, which in accordance with this alternative embodiment and serves the purpose of conducting the heat generated locally by the burning-off of the particles throughout the porous filter body so as to eliminate the risk of damaging the porous filter body by any local excessive exposure to extremely high temperatures.

According to a still further aspect, the porous filter body is regenerated or rinsed by conducting a rinsing air flow therethrough in the direction opposite to the direction in which the flue gas is conducted therethrough so as to blow out in a back or return flow the majority of the particles accumulated in the porous filter body.

It is known within the technical field of plastics materials to employ rigid metal filters for filtering a mass of plastics material. Within this technical field, a plurality of rigid metal filters have been developed and serve the purpose of providing a filter capable of withstanding a high pressure gradient by an inherent high mechanical strength of the rigid metal filter. Thus, in US patents Nos. 3,620,690, 3,788,486 and 3,940,269, to which reference is made and which are herewith incorporated in the present specification by reference, a sintered austenitic-ferritic chromium-nickel steel alloy, a rigid filter for filtering molten thermoplastic resin and further a process of blending powdered austenitic chromium-nickel stainless steel, respectively, are disclosed. According to the techniques described in these US patents, low density products may be provided, which are stated to have particular utility as filter elements. However, it is to be realized that the filters described in these US patents pay no or little attention to the thermal conductivity properties of the metal filter elements, and furthermore pay no attention to the above described burning-off problem.

A porous filter body may be provided in accordance with techniques known in the art *per se*, such as the techniques described in the above US patents 3,620,690, 3,940,269 and 3,788,486 and further in accordance with the techniques described in numerous references, such as the following US patents Nos. 2,792,302, 2,709,651, 2,902,363, 2,593,943, 3,223,523, 3,836,302 and 3,919,384 to which reference is made.

Thus, porous filter bodies may according to these techniques be made from powder of metal materials or metal-like materials by a variety of processes including the well-known cold compact process with or without a transient pore forming agent, such as fibres or spheres of a plastics material, such as organic polymer materials, e.g. silicone compositions, polypropylene or polystyrene, and subsequent sintering, and a so-called no-pressure sintering method. Alternatively, the porous filter bodies may be made by a casting process, e.g. an injection moulding process such as an injection process in which a mould, such as a plastics material or wax mould is employed. After filling the mould with the particulate metal or metal-like material, the plastics material or wax mould is melted away or burnt away. The material may be poured into the mould in a liquid phase comprising a volatile liquid and/or a liquid or solid binder. However, according to the invention, the porous filter bodies are made in an extrusion process, e.g. in accordance with the techniques described in the above US patents Nos. 3,836,302 and 3,919,384. It is also known to mix metal powder with a binder optionally mildly solidifying the mixture and/or linearly isostatically pressing the mixture, and to sinter the mixture, by which sintering process the binder is removed or solidified so as to bond the metal powder together. In the above US patents, numerous materials and binders are disclosed. These methods find application in the manufacture of particulate porous particles, and the selection of optimum method parameters etc. for any application depends upon the size of the article to be produced, its contour, its dimensions, its porosity and/or permeability, its mechanical strength, and further its thermal conductivity.

In a report, "Technical and Economic Evaluation of a Cold Isostatic Pressing Technique and Examination of the Pre-green specimen process" issued by Technological Institute/Industrial Metallurgy, a division of Teknologisk Institut, Tastrup, Denmark, dated February, 1987, aspects of a method for the production of specimens or products on the basis of powder materials is disclosed. The report mainly aims at specimens of high compactness, however, as will evident from an example to be discussed below, the technique described in this report may in a highly simple manner by the reduction of the static pressure to a very low pressure value be adapted to the production of a high-porous filter body of the flue gas filter means according to the present invention. As far as this advantageous method is concerned, reference is made to the report and to the example to be discussed below.

Dependent on the characteristics of the porous filter body of the flue gas filter means prepared according to the present invention, as to thermal conductivity, mechanical strength, capability of exposure to elevated or high temperatures, determined by the melting point SiC of the filter body, the size, dimensions and structure of the filter body, etc., the material or materials of the filter body is or are determined.

SiC is not a metal, but, however, exhibits metallic characteristics or properties, particularly a high thermal conductivity and further a high electrical conductivity. Such a material offers and exhibits high corrosion resistance. Thus, a thermal conductivity in excess of 10 W/mK is in the present context a high thermal conductivity. Silicone carbide, SiC, apart from a high thermal conductivity of 90-100 W/mK, has a high melting point of approximately 2400°C and furthermore resists oxidation at elevated temperatures.

In German patent No. 34 40 202, and in published German patent applications Nos. 32 32 729 and 34 38 217, interesting carbon oxidation catalysts are disclosed, viz. zirconium oxide chloride (ZrOCl₂), lithium oxide (Li₂O) and vanadium pentoxide (V₂O₅). The catalyst may thus constitute a coating of said body. Thus, it is believed that the porous filter concept of the present invention renders it possible to select carbon oxidizing catalysts different from the carbon oxidation catalysts used hitherto in connection with flue gas filters constructed from ceramic materials, as the catalysts which are compatible with a body of SiC are different from the catalysts which are compatible with or may be used in connection with known ceramic filters.

The filter means prepared according to the present invention may be implemented in numerous sizes and structures, such as the structures described in the references mentioned above. In the presently preferred embodiment of the filter means prepared according to the present invention, the porous filter body has a flue gas inlet side surface and an opposite gas outlet side surface, a first plurality of blind filtration cavities extending perpendicularly into said body from said inlet side surface and a second plurality of blind filtration cavities extending perpendicularly into said body from said outlet side surface, said blind filtration cavities of said first and said second pluralities being arranged spaced apart and mutually juxtaposed.

Alternatively or furthermore, the porous filter body of the filter means prepared according to the present invention may have partition walls defining a honeycomb structure or the porous filter body may be of a tubular structure. In accordance with a further alternative or additional embodiment of the flue gas filter means prepared according to the present invention, the porous filter body is constituted by a basically circular disc of a thickness, which is far smaller, several factors power of ten, than the diameter of the disc. The above described embodiments of the filter means are highly advantageous embodiments for the filtering of particles or soot from the exhaust gas generated by diesel engines, such as diesel engines of vehicles.

The particles to be filtered from the flue gas generated by a diesel engine mainly comprise carbon, however, further, as indicated above, include additives originating from additives to the diesel oil, additives of lubricants and materials or particles originating from engine wear. The origin of the particles is not completely revealed, however, a spectroscopic analysis of particles originating from a diesel engine discloses that the particles contain among others: Li, B, C, F, Na, Mg, Al, Si, P, S, Cl, K, Ca, Ti, Cr, Mn, Fe, Co, Ni, Cu, and Zn. The particles generated by a diesel engine are extremely small, thus, more than 50% of the particles are less than 0.5 µm and has a density of 0.05-0.1 g/cm³. A further analysis of the particles discloses that the soluble organic content of the particles is 5-20% by volume, in some instances even up to 90%, the content of hydrogen is 0-2%, the content of carbon is 70-90%, the content of ashes is 0-2%. The shape of the particles is irregular and defines an extremely large surface area, thus, the particles are highly porous and have a soft surface.

From the above, it will be understood that the particles to be filtered from the flue gas generated by a diesel engine are not only carbon particles, which may be oxidized into carbon monoxide and further by means of e.g. a platinum catalytic means, as is well-known within the art, be oxidized into carbon dioxide. However, some of the constituents of the particles remain in the filter body and result in a clogging of the filter body. Therefore, it is believed that a filter means prepared according to the present invention has a limited lifetime of approx. 3000-4000 hours corresponding to 100.000-150.000 km travelled by a vehicle with a diesel engine.

As indicated above, the flue gas filter means prepared according to the present invention is believed to find application in the field of filtering particles from flue gas generated in power plants, refuse disposal plants, etc., by the combustion of combustible materials, such as fossil fuel, e.g. coal, fuel oil or diesel oil, or refuse or waste. At present, flue gas generated by power plants is filtered by means of electrostatic filters, bag filters or tex-filters comprising membranes made of plastics materials, such as fibre glass resin, teflon, dralon, etc., which, however, cannot stand exposure to temperatures in excess of approx. 200°C, and so-called multi-cyclone filters. Contrary to these known filters, the filter means prepared according to the present invention is believed to provide an efficient means for filtering particles from flue gas generated in power plants or refuse disposal plants. In this application, the filter means is preferably implemented in accordance with an embodiment in which the porous filter body is of a tubular structure, through the peripheral wall of which the flue gas is conducted. Preferably, a plurality of tubular structure filter bodies are employed in a filter assembly of a flue gas filter to be used in a plant of the above type.

The SiC of the porous filter body may, as described above, be bonded together directly, e.g. by the application of a pressure or heat, e.g. generated by means of an electric current, or simply by heating the material, or alternatively or additionally be bonded together by means of a binder. In the references referred to above, a plurality of binders are mentioned, and, thus, the binder to be used in connection with the particulate metal material bonded together in the porous filter body of the flue gas filter means prepared according to the present invention is a binder which is generated by a high temperature treatment, such as exposure to a temperature of 1000-2000°C, such as 1400-1900°C, or is a heat fugitive binder such as a heat activated glue. Examples of such binders are elastomeric, thermoplastic or synthetic polymeric materials or resin basis binders well-known in the art *per se*. Alternatively, the binder may be a metal such as molybdenum, tin, a metal produced by reduction of a metal salt, a metal salt or a metal oxide, which is provided e.g. by a chemical treatment of the surface of the particulate metal material, as the material is bonded together in the porous filter body. Further alternatively or additionally, the binder may be a silicate, such as clay or hydrated aluminium silicate (Al₂O₃·2SiO₂·2H₂O) or another metal silicate composition, e.g. potassium or sodium silicate, which is a binder well-known in the art *per se*, e.g. described and discussed in the above article published by Technological Institute/Industrial Metallurgy, and further in the above US patent No. 4,604,869. Further alternatively, a silicic acid ester is believed to be an advantageous binder.

As indicated above, the SiC is in accordance with the techniques described in the above references, be bonded together in a sintering process, i.e. by heating the material to a high temperature. In the high temperature sintering process, the sintering is preferably carried out in a reducing atmosphere such as a hydrogen atmosphere or in vacuum in order to substantially eliminate the generation of oxides of SiC at the surfaces of the particulate SiC to be sintered. In the high temperature sintering process of SiC, the sintering is preferably carried out in an atmosphere of N₂ or an inert atmosphere, such as He or Ar, or in the atmosphere. Furthermore or additionally, the particulate SiC may be compacted prior to the sintering process by applying pressure to the material in a so-called isostatic pressing in which process heat may further be applied to the material.

The invention will now be further described with reference to the drawings, in which
Fig. 1 is a perspective and partly sectional view of an embodiment of a porous filter body prepared according to the present invention, and
Fig. 2 is a perspective and schematic view of a segment of the porous filter body shown in Fig. 1.

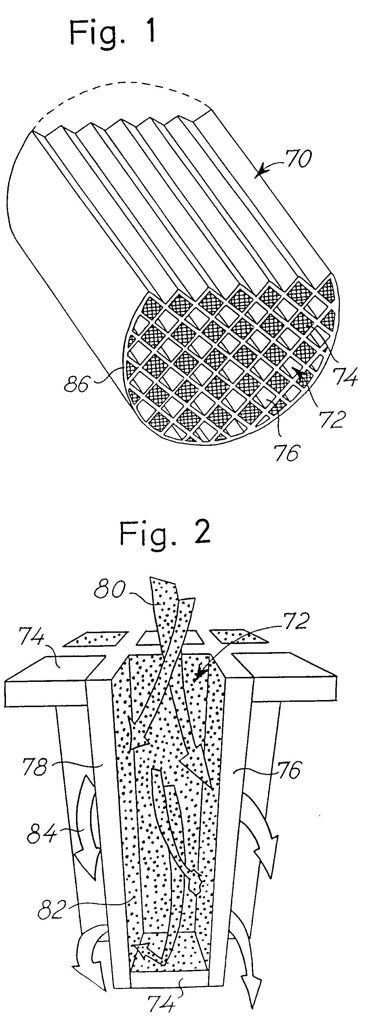

In Fig. 1, an embodiment of a porous filter body prepared according to the present invention is shown, which embodiment is designated the reference numeral 70 in its entirety. The porous filter body 70 is basically of a honeycomb structure manufactured in an extrusion process to be described in greater detail below with reference to Examples 1 or 2. The porous filter body 70 has an outer wall 86 defining a circular, cylindrical outer wall. In its longitudinal direction, a plurality of through-going channels extend from one end shown in Fig. 1 to the opposite end of the circular, cylindrical body 70, one of which channels is designated the reference numeral 72. The channel 72 is open at its end shown in Fig. 1 and blocked by a plate segment at the opposite end, not shown in Fig. 1. The channels adjacent to the channel 72 are, contrary to the channel 72, blocked by plate segments 74 at their ends shown in Fig. 1. However, these adjacent channels are open at their opposite ends, not shown in Fig. 1. A porous partition wall extending longitudinally within the porous filter body 70 is designated the reference numeral 76. The plate segments 74 may be porous or non-porous plate segments.

In Fig. 2, a segment of the honeycomb porous filter body structure 70 shown in Fig. 1 is shown in an enlarged scale. Thus, in Fig. 2, the channel 72 is shown defined by opposite partition walls 76 and 78 and blocked at its lower end by the filter plate segment 74. From Fig. 2, it is further evident that the channels adjacent to the channel 72 are blocked at their upper ends by filter plate segments 74. In Fig. 2, the upper ends of the vertical channels constitutes a flue gas entry end, through which particle-containing flue gas is introduced as indicated by an arrow 80. The arrow 80 illustrates the direction along which the flue gas is conducted or guided into the porous filter body. The particles introduced into the porous filter body are illustrated by dots, one of which is designated the reference numeral 82. The particles are trapped by the partition walls 76 and 78 and further the filter plate segments 74 as the flue gas stream is forced through partition walls 76 and 78 of the porous filter body as indicated by arrows, one of which is designated the reference numeral 84. After having been forced through the partition walls 76 and 78, the flue gas does not to any substantial extent contain particles or soot.

### EXAMPLE I (not part of the invention)

Porous metal filter bodies of the honeycomb structure shown in Fig. 1 were produced at Stobbe Engineering A/S' laboratory in Gentofte, Denmark, and at the Institute of Mineral Industry, Technical University of Denmark, Lyngby. The production process was basically an extrusion process in which a barrel and a screw were employed. From a metal powder of the type AISI 316 L supplied by the company Höganäs, an extrusion paste was produced further comprising a "green" or volatile binder of the type methyl cellulose, supplied by the company Hoechst and sold under the trade name Tylose MH 300 P. The plasticity and the viscosity of the paste was controlled by water and alcohol. In various experiments, the binder contained in the paste constituted 5-10 percent by weight and the content of water and alcohol constituted 25-40 percent by weight. Various ratios between water and alcohol of the order of 1:1.5 to 1:0.3 were tested. It was discovered that the provision of water and alcohol together provided a far more plastically deformable paste as compared to a paste including water only. The provision of alcohol did not influence the handling strength of the "green" bodies produced in the extrusion process. It is believed that a chemical reaction takes place when alcohols are added to the paste as a viscosity and plasticity controlling agent.

The extrusion was carried out at a temperature of approximately 18°C and was performed on a machine having a 80 mm screw extending through a die apparatus comprising an extrusion die with an inlet and an outlet surface. By the extrusion process, honeycomb structures having 25-100 cells/in² were produced. The extrusion operation pressure was of the order of 8-15 bar, and the particle size of the metal powder was of the order of 45-150 µm. By the extrusion process, "green" bodies were produced, which were dried in an oven of a constant humidity of 40-80% relative humidity and a temperature of 30-65°C for at least 2-4 days. The dried "green" bodies had a high handling strength allowing both machining and arrangement in a sintering oven. A sintering of the "green" bodies was carried out in an oven in which an H₂ atmosphere was produced in a gas-tight metal or ceramic chamber, in which a temperature of 1200-1300°C was generated.

After drying and sintering, the bodies had shrunk 2-10%. The porous filter bodies thus produced had a high porosity, of 60-70%, and a pore size of 30-50 µm. The density of the material was about 2.7 g/cm³ and the total bulk density was about 1.3-1.4 g/cm³. The thermal conductivity of the porous metal filter bodies was measured and it was established that the thermal conductivity was at least 5-10 times that of the material Cordierite, which has a thermal conductivity less than 1 W/mK, and which is a ceramic material used in known flue gas filters.

It was found that the temperature at which the extrusion process was carried out was of minor importance to the handling strength of the "green" bodies. It was further established that the particle size in conjunction with extrusion pressure, content of viscosity and plasticity controlling agents (water and alcohol) and binder were decisive for the porosity of the product.

The honeycomb porous filter bodies thus produced had far larger tensile strength and were far more elastic than similar structures manufactured from Cordierite, and they further allowed a far simpler canning without the provision of a lining between the filter body and the can. In known flue gas filters, a lining is provided between the ceramic body or bodies and the can, since the coefficients of thermal expansion of the ceramic material and the canning material are different.

Investigations have disclosed that even a 10% larger filtering surface can be provided by employing porous metal filter bodies in a metal can as compared to a similar structure of identical outer can dimensions, however, including a conventional Cordierite or ceramic filter structure.

It is believed that porous metal filter bodies of various shapes and structures may be produced by employing a cold compacting process with a transient pore forming agent (polypropylene or polystyrene), lost wax casting, injection molding, River's injection molding process and linear pressing. The following binders and plastisizers are further believed to be of interest for controlling the handling strength and mechanical properties of the paste from which the porous metal filter bodies are produced: glycerin, waxes such as waxes supplied by the company Hoechst, ethyl silicates supplied by Wacker, sodium silicates supplied by Diamond Shamrock and polyvinyl alcohols supplied by Kuraray Puval. The following particulate metal powder materials are of interest: AISI 316 L supplied by Höganäs and Avesta MA 253.

Apart from the above described H₂ atmosphere containing high temperature (1200-1300°C) oven, it is believed that a vacuum furnace in which a temperature of 1400°C is generated, may be used for sintering the "green" bodies to the porous metal filter bodies.

It is to be mentioned that porous metal filter bodies have been produced from some of the combinations of the above mentioned materials.

### EXAMPLE 2

Porous filter bodies of various shapes and manufactured from the metal-like material SiC were produced at Stobbe Engineering A/S' laboratory in Gentofte, Denmark, and at the Institute of Mineral Industry, Technical University of Denmark. The porous SiC filter bodies were produced by employing extrusion and injection molding techniques by which injection and extrusion pressures of the order of 5-15 bar were generated.

The porous SiC filter bodies were manufactured from SiC grains of a size of 75-170 µm. A "green" or volatile binder and a permanent or ceramic binder were used. The following permanent or ceramic binders were used: glass-mullite and silicon nitride. The following volatile or "green" binders were used: methylcellulose, clay and carbon black in a total amount of 5-15 percent by weight. The following plasticity and viscosity controlling agents were used in an amount of up to 0.2 percent by weight: glycerol and alcohol. Water and alcohol were further used as solvents in an amount of 20-25 percent by weight.

From the above components together constituting a paste, "green" bodies were produced, which "green" bodies were dried. The "green" bodies were then heated to a temperature of 1500-1900°C for generating the permanent or ceramic binder and consequently sintering the bodies together. From the clay binder, glass-mullite was generated provided the sintering process was carried out in the atmosphere, and silicon nitride was generated as the permanent or ceramic binder from the clay binder provided the sintering process was carried out in an N₂ atmosphere. By sintering the "green" bodies in an N₂ atmosphere, which "green" bodies included clay as the volatile or "green" binder, Al₂O₃ was further generated as a permanent binder.

The porous SiC filter bodies thus produced were tested and had the following characteristics: the porosity was of the order of 30-60%, the bulk density was of the order of 1.0-1.7 g/cm³ resulting in a geometrical bulk density of the filter bodies of the order of 0.5-0.8 g/cm³. It was discovered that the pore size of the porous SiC filter bodies could be matched to certain requirements determined by the initial size of the SiC grains.

It is believed that the following components may be used in connection with porous SiC filter bodies: permanent binder: micro-crystalline-siliconcarbide instead of glass-mullite or silicon nitride, green or volatile binder: waxes, ethyl silicates, polycarbosilane instead of or in addition to methyl cellulose, clays and carbon black.

It is further believed that the sintering process may be carried out in atmospheres different from the atmosphere and N₂ atmosphere, e.g. in an atmosphere of argon or helium.

The SiC porous filter body has a high resistance to corrosion and high thermal conductivity (100 W/mK). The resistance to corrosion is of particular importance in connection with the filtering of exhaust gases from diesel engines, which exhaust gases are known to be highly corrosive. The porous SiC filter body according to the present invention further has a high melting point, which ensures that the porous filter body under no circumstances is melted down.

Apart from its ability to stand the thermal stresses generated by the burning-off of particles trapped in the porous filter body, the porous filter body concept of the present invention provides distinct advantages as compared to the prior art ceramic filter flue gas structures. The flue gas filter means prepared according to the present invention provides an almost optimum space and surface relationship, which is of the outmost importance in connection with automobiles, vehicles, locomotives, etc., where the flue gas filter means must be of a maximum compactness for occupying minimum space and still provide an adequately large filtering surface area.

As discussed above, the porous filter body of the present invention may be provided with a catalyst for catalysing the burning-off of soot accumulated in the porous filter body, however, the catalyst may alternatively be provided in the can or enclosure, e.g. as an inner coating thereof.

It is further believed that the teachings of the present invention may find application in other technical fields, in which gases or liquids are to be filtered, by which filtering process particles are accumulated in the filter means, whereupon the particles are burned off, by which burning-off the filter body is exposed to high temperatures, which should be controlled or reduced or even eliminated so as to eliminate risk of any fatal damaging of the filter body.

## Claims

1. A method for preparing a porous filter body by mixing SiC particles with a particle size of 75 - 170 µm, a green or volatile binder, a plasticity or viscosity controlling agent and a solvent to produce a plastic paste, extruding the paste to form an extruded green body and sintering the extruded body to produce a filter body whereby a permanent or ceramic binder is generated, the filter body having a maximum pore size of 10 - 100 µm, a thermal conductivity of at least 5 W/(m K) and a porosity of 30 - 60 % .

## Patentansprüche

1. Verfahren zum Herstellen eines porösen Filterkörpers durch Mischen von SiC Partikeln mit einer Partikelgröße von 75 - 170 µm, einem Grünling oder flüchtigen Binder, einem die Plastizität oder Viskosität steuernden Agens und einem Lösungsmittel zum Herstellen einer plastischen Paste, Extrudieren der Paste zum Bilden eines extrudierten Grünlingskörpers und Sintern des extrudierten Körpers zum Herstellen eines Filterkörpers, wodurch ein dauerhafter oder keramischer Binder generiert wird, wobei der Filterkörper eine maximale Porengröße von 10 - 100 µm, eine Wärmeleitfähigkeit von mindestens 5 W/(m*K) und eine Porösität von 30 - 60 % besitzt.

## Revendications

1. Procédé pour préparer un corps de filtre poreux en mélangeant des particules de SiC avec une granulométrie de 75 à 170 µm, un liant volatile ou cru, un agent régulant la viscosité ou la plasticité et un solvant pour produire une pâte plastique, en extrudant la pâte pour former un corps cru extrudé et en frittant le corps extrudé pour produire un corps de filtre engendrant ainsi un liant permanent ou céramique, le corps de filtre ayant une taille de pores maximale de 10 à 100 µm, une conductivité thermique d'au moins 5 W/(m K) et une porosité de 30 a 60%.
